# EUROPEAN PATENT SPECIFICATION

(11) **EP 2 029 259 B1**
(45) Date of publication and mention of the grant of the patent: **14.05.2014**
(21) Application number: 07733706.1
(22) Date of filing: 23.05.2007
(51) Int. Cl.: B01D 53/68, B01D 53/70, F23G 7/06, F23J 7/00

(54) **METHOD AND APPARATUS FOR THE REMOVAL OF FLUORINE FROM A GAS STREAM**
VERFAHREN UND VORRICHTUNG ZUR ENTFERNUNG VON FLUOR AUS EINEM GASSTROM
PROCÉDÉ ET APPAREIL DESTINÉS À L'ÉLIMINATION DU FLUOR D'UN FLUX GAZEUX

(30) Priority: 16.06.2006 GB 0611968
(43) Date of publication of application: 04.03.2009
(73) Proprietor: Edwards Limited, Crawley, West Sussex RH10 9LW (GB)
(72) Inventor: SEELEY, Andrew James, Clevedon, Somerset BS21 6TH (GB)
(74) Representative: Norton, Ian Andrew
(86) International application number: PCT/GB2007/050285
(87) International publication number: WO 2007/144665

(56) References cited:
- EP-A1- 1 297 891
- WO-A-93/02772
- DE-A1- 3 319 516
- DE-A1- 4 042 028
- GB-A- 2 286 542
- GB-A- 2 308 991
- US-A- 2 919 174
- US-A- 4 236 464
- US-A1- 2003 194 367
- US-A1- 2004 241 069

## Description

The present invention is concerned with the removal of fluorine from a gas stream, and finds particular use in the removal of fluorine from fluorine containing gases exhausting from a process tool used in the semiconductor or flat panel industry.

CF₄, C₂F₆, NF₃, SF₆ and molecular fluorine (F₂) are commonly used as etchant precursor gases in the semiconductor and flat panel industry to provide a source of excited fluorine species for processes such as dielectric layer etching and chamber cleaning.

In most cases excited fluorine species such atomic fluorine are formed in situ, or upstream of a chamber, to react with unwanted deposits and form volatile fluorinated compounds that are easily pumped away. However, gas use during these steps is often inefficient and so the effluent gas stream from the tool can have a residual amount of either the fluorinated pre-cursor gas or a range of other gaseous fluorinated reaction by-products.

Due to their toxicity and/or extremely high global warming potential any unused fluorinated gases and fluorinated reaction by-products must be removed (abated) from the chamber exhaust gas mixture prior to its release to the atmosphere. At present abatement is commonly carried out by combustive techniques, in devices such as inwardly fired burners, electrically heated burners, open flame burners or plasma abatement devices. In these devices the exhaust gases from the process chamber pass to a reactive zone where there is sufficient energy and reactive species, in the form of heat and fuel/oxidant gases respectively, to effect the conversion of the fluorinated gases to hydrofluoric acid (HF).

To meet stringent emission targets the hydrofluoric acid must then be removed from the gas stream, which is often achieved with wet scrubbers. These require large volumes of water to dissolve the HF, which is subsequently removed from the water by reaction with calcium salts as a calcium fluoride precipitate (CaF₂). The precipitate is separated from the water by settling and "caking" allowing the water to be reused or passed to the sewerage system. The hydrofluoric acid may also be removed by passing the exhaust gases from the combustive destruction device through a dry reactive bed of Calcium salts, which are often inefficient due to the formation of a calcium fluoride layer on the surface of the bed, rendering it impervious to further reaction. Documents EP1297891; DE4042028; GB2308991; US2003/194367; and US4236464 all describe various methods of destroying halogen containing gases in the presence of an alkali metal salt. However, they all either produce wet alkali metal precipitates as a by-product, or suffer from gas stream conductance issues.

Document US 4 236,464 and US 2004 0 241 069 discloses a method for the removal of a fluorinated gas from a gas stream comprising the steps of: conveying the gas stream containing the fluorinated gas to a combustion region, decomposing the fluorinated gas in the combustion region, and entraining a calcium salt capable of reacting with the fluorinated gas decomposition products into the gas stream to react with the fluorinated gas decomposition products to form dry calcium fluoride and then removing the dry calcium fluoride salt from the gas stream.

It is the intention of the invention described herein to address some of these problems.

The present invention provides a method for the removal of a fluorinated gas from a gas stream according to claims 1 and 2 and as set out in the independent claims.

This provides a new method for the removal of fluorinated gases such as molecular fluorine (F₂) and perfluorinated gases (for example nitrogen trifluoride (NF₃), carbon tetrafluoride (CF₄), hexafluoroethane (C₂F₆), silicon tetrafluoride (SiF₄), and sulphur hexafluoride (SF₆)) from a gas stream. The method advantageously reduces the requirement for expensive multi stage water treatment methods or inefficient dry bed reactors to remove the fluorinated decomposition (abatement) products from the gas stream on exiting the combustion region.

The combustion region is preferably, but not limited to, that of devices such as inwardly fired burners, electrically heated burners, open flame burners, DC plasmas and microwave plasma reactors. Such devices, already widely used for the destruction (abatement) of fluorinated gases, could advantageously be retro fitted with calcium fluoride entrainment devices, thus allowing the user to save energy without the need for large additional capital expenditure.

The calcium salts may be entrained into the gas stream containing the fluorinated gas prior to it entering the combustion region and/or when it is inside the combustion region. The calcium salts are preferably entrained in the gas stream either inside or close to the exit of the combustion region as the thermal conditions present enhance the reaction between the calcium salt and the fluorinated gas decomposition products.

The calcium salts may be entrained into the gas stream containing the fluorinated gas using many of the methods know to the skilled person such as air blown powder techniques, atomising spray techniques, simple spraying techniques and vaporisation techniques.

A carrier gases may be also used to entrain the calcium salt into gas stream including air, nitrogen, hydrogen, oxygen, methane, butane. The use of either a reducing or oxidising carrier gas can advantageously improve the reaction between the calcium salts and fluorinated decomposition products.

The calcium salt or its decomposition products must be able to react with the fluorinated decomposition products formed in the combustion region to form calcium fluoride, preferably without producing substantial quantities of undesirable additional gaseous by-products such as acids or NOx that would require further expensive scrubbing techniques. Examples of suitable calcium salts include, for example, CaO (Lime), CaCO₃, Ca(OH)₂ (Slaked Lime), and organo-calcium salts such as Ca(CH₃CH₂CO₂)₂.H₂O. The calcium fluoride, which can then be removed from the gas stream by one or a combination of filter, cyclone and electrostatic precipitator devices. In apparatus where an atomising, or simple spraying technique are favoured it is preferable to use calcium acetate, Ca(CH₃CH₂CO₂)₂.H₂O, as it readily forms a concentrated aqueous solution, thus maximising the amount of calcium and limiting the amount of water supplied to the apparatus and ensuring that the calcium fluoride salt, formed by reaction with the fluorinated gas decomposition products, remains substantially dry.

The removal of calcium fluoride from the gas stream can be carried out either in-situ by a device local to the combustion device or by a scrubber unit situated remotely from the combustion device, which allows the calcium fluoride from several combustion devices to be removed in a centralised area thus minimising the risk of particulate contamination of the ultra clean semiconductor processing areas.

Preferred features of the present invention will now be described by way of example with reference to the accompanying drawings, in which:
Figure 1 illustrates a first schematic for the removal of fluorinated gas from a gas stream.
Figure 2 shows an embodiment of the schematic illustrated in figure 1
Figure 3 shows a further embodiment of the schematic illustrated in figure 1
Figure 4 illustrates a second schematic for the removal of fluorinated gas from a gas stream.

### The drawings are not to scale

Like parts in different Figures are referred to below by the same reference numeral.

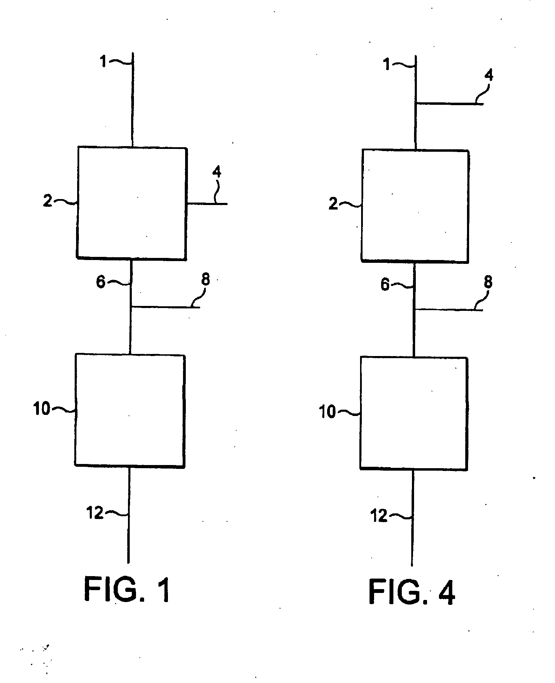

Figure 1 illustrates schematically an apparatus for the removal of fluorinated gas from a gas stream. The apparatus comprises path 1 for conveying gas stream or streams containing fluorinated gas, for example, pumped from a semiconductor or flat panel display process tool by means of a vacuum pumping system (not shown) to combustion region 2. Combustion region 2 may be, for example, that of an inwardly fired burner, electrically heated burner, open flame burner, DC plasma or microwave plasma reactor, wherein the fluorinated gas is converted (abated) to HF. Combustion region 2 also comprises inlet 4 for entraining a calcium salt, for example one of, calcium oxide, slaked lime, calcium carbonate and calcium acetate, into the gas stream within combustion region 2. The calcium salt, dependent on its particular composition, may be entrained into the gas stream in combustion region 2 as a solution, powder or vapour by methods well known in the art, such as air blown powder methods, atomising spray methods and vaporisation methods. The calcium salt can be directly entrained into the gas stream in the combustion region or alternatively first entrained into an additional carrier gas stream, which is then supplied to the gas stream in the combustion region 2 via inlet 4. The calcium salt, or its decomposition products, reacts with the HF in the combustion region to form calcium fluoride.

Path 6 conveys the calcium fluoride-rich gas stream exiting the combustion region 2 to calcium fluoride removal device or devices 10 in which the calcium fluoride is removed from the gas stream, with a calcium fluoride lean gas stream exiting the removal device 10 via path 12. Removal device 10 may be, for example, a cyclone, filter and electrostatic precipitator, or combinations thereof.

In order to both remove heat from the gas stream exiting the combustion region 2 and ensure that the calcium fluoride remains airborne, and is therefore prevented from collecting on the surfaces of the apparatus upstream of the removal device 10, an optional flow gas, such as air, oxygen or nitrogen, may be supplied to path 6 via inlet 8.

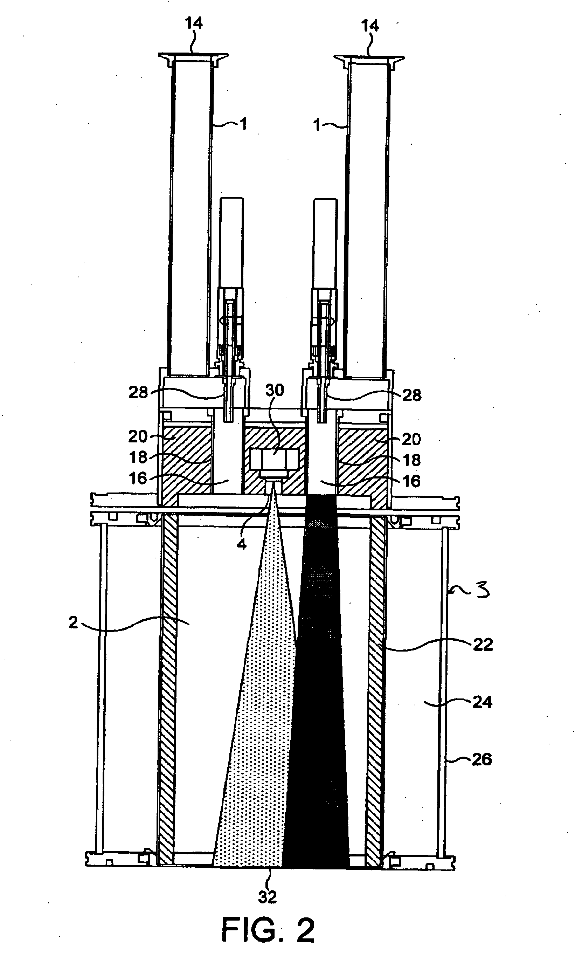

Figure 2 shows a preferred embodiment of the abatement section of the schematic apparatus illustrated in figure 1. The apparatus comprises one or more inlets 14 for receiving an effluent gas stream or streams containing fluorinated gas. The effluent gas stream or streams containing the fluorinated gas are conveyed along paths 1 to nozzles 16 from which the effluent stream is injected into combustion region 2. In the illustrated embodiment two inlets 14 are shown for receiving two effluent gas streams containing fluorinated gas from two pumping systems connected to, for example, two process chambers. Alternatively the effluent gas stream from a chamber may be "split" and conveyed to each of the inlets 14. The preferred embodiment comprises four inlets 14.

Each nozzle 16 is located within a respective bore 18 formed in a ceramic top plate 20, which defines the upper (as shown) surface of the combustion region 2. The combustion region 2 is within the bounds of the exit surface of a foraminous burner element 22 such as that described in EP-A-0 694 735. A plenum volume 24 is formed between the burner and a cylindrical outer shell 3. A mixture of fuel gas such as natural gas, or hydrocarbon, and air is introduced into the volume24 via one or more inlet nozzles (not shown) so that, during use, the mixture of fuel gas and air will burn without visible flame at the exit surface of burner element 22.

In order to optimize combustion conditions to achieve abatement of the particular fluorinated gas contained within the effluent gas stream it is preferable to supply additional fuel gas and/or oxygen to enrich the effluent stream prior to its entry into the combustion region 2. Therefore the apparatus includes means, by way of a lance 28 substantially concentrically positioned within the nozzle 16, for introducing oxygen into the effluent stream upstream of the combustion region 2, similar to that described in EP 0 802 370 A2. Additional fuel gas may be added by any suitable means (not shown) to the effluent gas stream at any convenient point upstream of the combustion region. However, for reasons of flammability, the oxygen and fuel gas should not be present in the effluent stream for any appreciable length of time prior to their injection to the combustion zone, and so the opening of the lance 28 into the nozzle 16 terminates between 0.7 and 3 pipe diameters prior to the point of injection of the effluent into the combustion region. The relative proportions of fuel gas and/or oxidant may be varied dependent on the type of fluorinated compounds present in the effluent stream.

Upon injection into the region 2 the enriched effluent gas mix ignites to form a flame extending from the nozzle 16 into the chamber 2 effecting the abatement of fluorinated gases by the general formula:

Fluorinated gas + Fuel + Oxygen → HF + CO/CO₂ and H₂O (1)

The apparatus also comprises one or more calcium salt entrainment devices 30, preferably an atomising spray device although other entrainment devices are also suitable, located within ceramic top plate 20. The calcium salt is entrained into the gas stream in the combustion region, by any of the aforementioned means, via inlet 4. The entrainment device/or devices 30 and their corresponding inlets 4 are positioned such that sufficient mixing of the entrained calcium salt and effluent gas stream occurs in the combustion region 2 without inhibiting the flame extending from the nozzle 16 into the region 2. Upon entrainment into the gas stream in region 2 the calcium salt, or its decomposition products, reacts with hydrofluoric acid from the abatement of the fluorinated gases to form calcium fluoride by the general formula:

HF + Calcium salt → CaF₂ (2)

The gas stream and calcium fluoride then exit the abatement apparatus via exit 32 and are conveyed to one of the aforementioned device or devices 10 for the removal of the calcium fluoride from the gas stream.

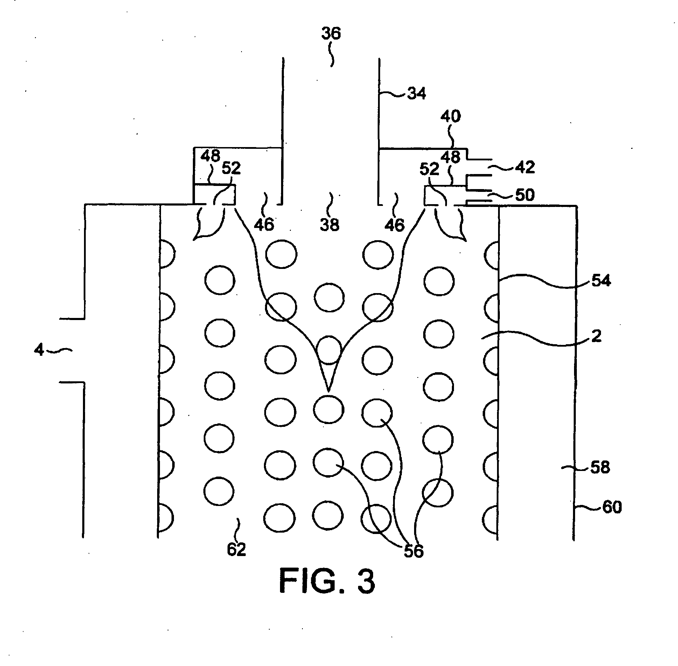

Figure 3 shows a further preferred embodiment of the abatement section of the schematic apparatus illustrated in figure 1. The apparatus comprises one or more combustion nozzles 34 connected to a combustion region 2, similar in construction and use to those described in EP-A-0 819 887. Each combustion nozzle 34 has an inlet 36 for receiving effluent gas containing fluorinated gas, and an outlet 38 from which the exhaust gas enters combustion region 2. Whilst Figure 3 illustrates a single combustion nozzle 34 for receiving the effluent gas containing a fluorinated gas, the apparatus may comprise any suitable number, for example four, six or more, nozzles 34 for receiving the effluent from a single or multiple process tools. In the preferred embodiments, the apparatus comprises four nozzles 34.

As illustrated in Figure 3, each nozzle 34 is mounted in a first annular plenum chamber 40 having an inlet 42 for receiving a first gas mixture of fuel and oxidant, for example, a mixture of methane and air, providing a combustion gas for forming combustion flames within the combustion region 2, and a plurality of outlets 46 from which the combustion gas exits the plenum 40 into the combustion chamber 2. As illustrated in Figure 3, the combustion nozzle 34 is mounted in the first plenum chamber 40 such the nozzle 34 passes substantially co-axially through a respective outlet 46 and that the first combustion gas mixture is conveyed into the combustion chamber 2 about the combustion nozzles 34.

As also illustrated in Figure 3, the first plenum chamber 40 is located above a second annular plenum chamber 48 having an inlet 50 for receiving a second, pilot gas mixture of fuel and oxidant, for example, another mixture of methane and air, for forming pilot flames within the combustion chamber 2. As illustrated in Figure 3, the second plenum chamber 48 comprises second apertures 52 surrounding the first apertures 46 from the first plenum chamber 40. The second apertures 52 allow the pilot gas mixture to enter the combustion chamber 2 to form the pilot flame for igniting the combustion gas entering the combustion region 2 via apertures 46 to form combustion flames within the combustion chamber 2.

The first combustive gas mixture exiting apertures 46 is ignited by the pilot flame, formed from the second pilot gas mixture exiting apertures 52, to form a combustion flame extending into the combustion region 2 concentrically surrounding the path of the effluent gas stream exiting the nozzle 34. The effluent gas stream conveyed through the nozzle 34 enters the combustion region 2 via outlet 38 into the center of the combustion flame such that the fluorinated gases are abated according to the general formula (1) above.

The combustion chamber 2 is within the bounds of a substantially cylindrical conduit 54. The conduit 54 has a plurality of apertures 56 through which gas can pass from plenum chamber 58 formed between the conduit 54 and an outer shell 60. A suitable calcium salt entrainment device, preferably an air blow powder device or atomising spray device (not shown), although other entrainment devices are also suitable, is used to entrain a calcium salt into a gas stream, for example air, which is fed into the plenum chamber 58 via inlet 4. The calcium salt enriched gas enters combustion region 2 via apertures 56. The calcium salt, or its decomposition products, then reacts with the HF to form calcium fluoride according to the general formula (2) above. The effluent stream and calcium fluoride then exit the combustion region 2 via exit 62 and are conveyed from the abatement device to one of the aforementioned device or devices 10 for the removal of the calcium fluoride from the gas stream.

Figure 4 illustrates schematically a second apparatus for the removal of fluorinated gas from a gas stream. The apparatus is substantially similar to that illustrated in figure 1, however the inlet 4 for entraining calcium salt into the gas stream is positioned in path 1 so that the calcium salt is entrained into the gas stream containing fluorinated gas prior to it being conveyed into the combustion chamber 2.

In use of the apparatus shown schematically in figure 4 an effluent gas stream containing a fluorinated gas is conveyed along path 1 wherein a calcium salt is entrained into the gas stream, using any of the aforementioned means, via inlet 4. The gas stream containing the fluorinated gas and calcium salt is conveyed to combustion region 2 wherein the fluorinated gas is abated to form HF which reacts with the calcium salt or its decomposition products to form calcium fluoride. The gas stream containing the calcium fluoride is then conveyed from the combustion region 2, along path 6, to one of aforementioned calcium fluoride removal device or devices 10, wherein the calcium fluoride is removed from the gas stream which then exits the calcium fluoride removal device via path 12.

A carrier gas, for example, air, oxygen and nitrogen may be optionally added via inlet 8 to the gas stream conveyed along path 6 to encourage the calcium fluoride to stay airborne until it reaches calcium fluoride removal device 10.

## Claims

1. A method for the removal of a fluorinated gas from a gas stream comprising the steps of: conveying the gas stream containing the fluorinated gas to a combustion region, decomposing the fluorinated gas in the combustion region, wherein the method also comprises the steps of entraining a calcium salt capable of reacting with the fluorinated gas decomposition products into the gas stream upstream of the combustion region and conveying the gas stream containing the fluorinated gas and calcium salt to the combustion region to react with the fluorinated gas decomposition products to form dry calcium fluoride salt and then removing the dry calcium fluoride salt from the gas stream.

2. A method for the removal of a fluorinated gas from a gas stream comprising the steps of: conveying the gas stream containing the fluorinated gas to a combustion region, decomposing the fluorinated gas in the combustion region, wherein the method also comprises the steps of entraining a calcium salt capable of reacting with the fluorinated gas decomposition products into the gas stream inside of the combustion region to react with the fluorinated gas decomposition products to form dry calcium fluoride salt and then removing the dry calcium fluoride salt from the gas stream.

3. A method for the removal of a fluorinated gas from a gas stream according to claim 1 wherein the calcium salt capable of reacting with the fluorinated gas decomposition products is also entrained into the gas stream inside of the combustion region to react with the fluorinated gas decomposition products to form dry calcium fluoride salt.

4. A method according to any preceding claim, wherein the fluorinated gas is one or a mixture of molecular fluorine (F₂) and the perfluorinated gases.

5. A method according to Claim 4, wherein the perfluorinated gases are one or a mixture of nitrogen trifluoride (NF₃), carbon tetrafluoride (CF₄), Hexafluoroethane (C₂F₆), Silicon tetrafluoride (SiF₄), Sulphur hexafluoride (SF₆).

6. A method according to any preceding claim, wherein the calcium salt is one or a mixture of CaO, CaCO₃, Ca(OH)₂, Lime, Slaked Lime and Ca(CH₃CH₂CO₂)₂.H₂0

7. A method according to any preceding claim, wherein the calcium salt is entrained into the gas stream by an air blown powder technique

8. A method according to any of Claims 1 to 6, wherein the calcium salt is entrained into the gas stream by a simple spraying technique

9. A method according to any of Claims 1 to 6, wherein the calcium salt is entrained into the gas stream by an atomising spray technique

10. A method according to any preceding claim, wherein the combustion region is that of an inwardly fired burner.

11. A method according to any of Claims 1 to 9, wherein the combustion region is that of an electrically heated burner.

12. A method according to any of Claims 1 to 9, wherein the combustion region is that of an open flame burner.

13. A method according to any of Claims 1 to 9, wherein the combustion region is that of a plasma reactor.

14. A method according to any preceding claim, wherein the dry calcium fluoride salt is removed from the gas stream by one of a filter, a cyclone and electrostatic precipitator.

## Patentansprüche

1. Verfahren zum Entfernen eines fluorierten Gases aus einem Gasstrom, welches die Schritte aufweist: Fördern des das fluorierte Gas enthaltenden Gasstroms in einen Verbrennungsbereich, Zersetzen des fluorierten Gases in dem Verbrennungsbereich, wobei das Verfahren außerdem die Schritte des Einziehens eines Kalziumsalzes, das mit den Zersetzungsprodukten des fluorierten Gases reagierfähig ist, in dem Gasstrom stromauf des Verbrennungsbereichs, und des Förderns des Gasstroms, der das fluorierte Gas und das Kalziumsalz enthält, in den Verbrennungsbereich, um mit den Zersetzungsprodukten des fluorierten Gases zur Bildung von trockenem Kalziumfluoridsalz zu reagieren, und des anschließenden Abscheidens des trockenen Kalziumfluoridsalzes aus dem Gasstrom umfaßt.

2. Verfahren zum Entfernen eines fluorierten Gases aus einem Gasstrom, welches die Schritte umfaßt: Fördern des das fluorierte Gas enthaltenden Gasstroms in einen Verbrennungsbereich, Zersetzen des fluorierten Gases in dem Verbrennungsbereich, wobei das Verfahren außerdem die Schritte des Einziehens eines Kalziumsalzes, das mit den Zersetzungsprodukten des fluorierten Gases zu reagierbar ist, in dem Gasstrom innerhalb des Verbrennungsbereichs, um mit den Zersetzungsprodukten des fluorierten Gases zur Bildung von trockenem Kalziumfluoridsalz zu reagieren, und des anschließenden Abscheidens des trockenen Kalziumfluoridsalzes aus dem Gasstrom umfaßt.

3. Verfahren zum Entfernen eines fluorierten Gases aus einem Gasstrom aus Anspruch 1, wobei das mit den Zersetzungsprodukten des fluorierten Gases reaktionsfähige Kalziumsalz außerdem innerhalb des Verbrennungsbereichs in den Gasstrom eingezogen wird, um mit den Zersetzungsprodukten des fluorierten Gases zur Bildung von trockenem Kalziumfluoridsalz zu reagieren.

4. Verfahren nach irgendeinem vorhergehenden Anspruch, wobei das fluorierte Gas eines von oder ein Gemisch von molekularem Fluor (F₂) und den perfluorierten Gasen ist.

5. Verfahren nach Anspruch 4, wobei die perfluorierten Gase eines von oder ein Gemisch von Stickstofftrifluorid (NF₃), Kohlenstofftetrafluorid (CF₄), Hexafluorethan (C₂F₆), Siliziumtetrafluorid (SiF₄), Schwefelhexafluorid (SF₆) ist.

6. Verfahren nach irgendeinem vorhergehenden Anspruch, wobei das Kalziumsalz eines von oder ein Gemisch von CaO, CaCo₃, Ca(OH)₂, Kalk, Löschkalk und Ca(CH₃CH₂CO₂)₂.H₂O ist.

7. Verfahren nach irgendeinem vorhergehenden Anspruch, wobei das Kalziumsalz in den Gasstom mittels einer Pulverluftblastechnik eingezogen wird.

8. Verfahren nach einem der Ansprüche 1 bis 6, wobei das Kalziumsalz in den Gasstrom durch eine einfache Sprühtechnik eingezogen wird.

9. Verfahren nach einem der Ansprüche 1 bis 6, wobei das Kalziumsalz in den Gasstrom durch eine Zerstäubungssprühtechnik eingezogen wird.

10. Verfahren nach irgendeinem vorhergehenden Anspruch, wobei der Verbrennungsbereich der Bereich innerhalb eines befeuerten Brenners ist.

11. Verfahren nach einem der Ansprüche 1 bis 9, wobei der Verbrennungsbereich der Bereich eines elektrisch beheizten Brenners ist.

12. Verfahren nach einem der Ansprüche 1 bis 9, wobei der Verbrennungsbereich derjenige eines Brenners mit offener Flamme ist.

13. Verfahren nach einem der Ansprüche 1 bis 9, wobei der Verbrennungsbereich derjenige eines Plasmareaktors ist.

14. Verfahren nach irgendeinem vorhergehenden Anspruch, wobei das trockene Kalziumfluoridsalz aus dem Gasstrom durch ein Filter, ein Zyklon oder einen elektrostatischen Abscheider abgeschieden wird.

## Revendications

1. Procédé destiné à l'élimination d'un gaz fluoré d'un flux gazeux, comprenant les étapes qui consistent à : amener le flux gazeux contenant le gaz fluoré jusqu'à une région de combustion, décomposer le gaz fluoré dans la région de combustion, dans lequel le procédé comprend également les étapes qui consistent à entraîner un sel de calcium apte à réagir avec les produits de décomposition du gaz fluoré dans le flux gazeux en amont de la région de combustion, et à amener le flux gazeux contenant le gaz fluoré et le sel de calcium jusqu'à la région de combustion pour réagir avec les produits de décomposition du gaz fluoré afin de former du sel de fluorure de calcium sec, puis à éliminer le sel de fluorure de calcium sec du flux gazeux.

2. Procédé destiné à l'élimination d'un gaz fluoré d'un flux gazeux, comprenant les étapes qui consistent à : amener le flux gazeux contenant le gaz fluoré jusqu'à une région de combustion, décomposer le gaz fluoré dans la région de combustion, dans lequel le procédé comprend également les étapes qui consistent à entraîner un sel de calcium apte à réagir avec les produits de décomposition du gaz fluoré dans le flux gazeux à l'intérieur de la région de combustion pour réagir avec les produits de décomposition du gaz fluoré afin de former du sel de fluorure de calcium sec, puis à éliminer le sel de fluorure de calcium sec du flux gazeux.

3. Procédé destiné à l'élimination d'un gaz fluoré d'un flux gazeux selon la revendication 1, dans lequel le sel de calcium apte à réagir avec les produits de décomposition du gaz fluoré est également entraîné dans le flux gazeux à l'intérieur de la région de combustion pour réagir avec les produits de décomposition du gaz fluoré afin de former du sel de fluorure de calcium sec.

4. Procédé selon une quelconque revendication précédente, dans lequel le gaz fluoré est un mélange de fluor moléculaire (F₂) et de gaz perfluorés, ou l'un de ces éléments.

5. Procédé selon la revendication 4, dans lequel les gaz perfluorés sont un mélange de trifluorure d'azote (NF₃), de tétrafluorure de carbone (CF₄), d'hexafluoroéthane (C₂F₆), de tétrafluorure de silicium (SiF₄), d'hexafluorure de soufre (SF₆), ou l'un de ces éléments.

6. Procédé selon une quelconque revendication précédente, dans lequel le sel de calcium est un mélange de CaO, de CaCO₃, de Ca(OH)₂, de chaux, de chaux éteinte et de Ca(CH₃CH₂CO₂)₂.H₂O, ou l'un de ces éléments.

7. Procédé selon une quelconque revendication précédente, dans lequel le sel de calcium est entraîné dans le flux gazeux au moyen d'une technique de poudre soufflée par air.

8. Procédé selon l'une quelconque des revendications 1 à 6, dans lequel le sel de calcium est entraîné dans le flux gazeux au moyen d'une technique de pulvérisation simple.

9. Procédé selon l'une quelconque des revendications 1 à 6, dans lequel le sel de calcium est entraîné dans le flux gazeux au moyen d'une technique de pulvérisation par atomisation.

10. Procédé selon une quelconque revendication précédente, dans lequel la région de combustion est celle d'un brûleur à allumage interne.

11. Procédé selon l'une quelconque des revendications 1 à 9, dans lequel la région de combustion est celle d'un brûleur à chauffage électrique.

12. Procédé selon l'une quelconque des revendications 1 à 9, dans lequel la région de combustion est celle d'un brûleur à flamme nue.

13. Procédé selon l'une quelconque des revendications 1 à 9, dans lequel la région de combustion est celle d'un réacteur à plasma.

14. Procédé selon une quelconque revendication précédente, dans lequel le sel de fluorure de calcium sec est éliminé du flux gazeux au moyen d'un élément parmi un filtre, un cyclone et un dépoussiéreur électrostatique.
